Europäisches Patentamt

European Patent Office

Office européen des brevets

(19)

(11) **EP 1 318 376 A2**

(12) **EUROPEAN PATENT APPLICATION**

(43) Date of publication:
**11.06.2003 Bulletin 2003/24**

(51) Int Cl.⁷: **G01B 7/06**, G01D 5/24

(21) Application number: **02027524.4**

(22) Date of filing: **06.12.2002**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **10.12.2001 IT MI20012583**

(71) Applicant: **ELECTRONIC SYSTEMS S.P.A.**
**28015 Momo (NO) (IT)**

(72) Inventors:
• **Saini, Marco**
**28041 Arona (NO) (IT)**
• **Traficante, Francesco**
**21052 Busto Arsizio (VA) (IT)**
• **Viero, Davide**
**21015 Lonate Pozzolo (VA) (IT)**

(74) Representative: **Premru, Rok**
**Via De Amicis 4**
**I-20052 Monza (MI) (IT)**

(54) **Apparatus and method for measuring the thickness of dielectric films**

(57)     The present invention relates to an apparatus for measuring the thickness of dielectric materials in film form, which has a capacitive sensor that can confine the dielectric flux lines ($\psi 1$, $\psi 2$) to a region of space (2a, 2b) outside the space defined by the sensor plates (3, 4, 5), which region in space (2a, 2b) is adapted to receive the film (6) of material to be measured, said sensor (1) having a central plate (3) disposed asymmetrically between the two side plates (4, 5), the three plates (3, 4, 5) forming two capacitors (C1, C2) with a common plate (3), characterized in that means (7) are provided to simultaneously measure the capacitances of said two capacitors (C1, C2) and to convert the so measured capacitances into a signal indicative of the thickness of the measured material (6), and that means (8) are also provided to determine the ratio ($\tau$) between the measured capacitances (C1, C2) and to derive the thickness of the dielectric film (6) as a function of said ratio ($\tau$).

Figura 3

EP 1 318 376 A2

**Description**

This invention relates to an apparatus for measuring the thickness of dielectric materials in film, flat or tubular form.

This invention further addresses a method for measuring the thickness of dielectric materials in film, flat or tubular form.

The principle of measuring the thickness of a film by using a capacitive sensor, placed on one side of a film material, is known.

These thickness gauges, which are disposed in direct contact or in the proximity of the material, are particularly used in bubble extrusion processes, wherein the arrangement of sensors inside the extruded tube provides serious drawbacks.

Capacitive sensors in apparatuses used for this purpose are made in such a manner as to confine the dielectric flux lines $\psi$ to a substantially flat or slightly arched region, outside the space between the plates of the sensor, which region is adapted to receive the film to be measured.

According to a first possible embodiment, the capacitive sensor has a central elongated plate, equidistant from two side plates, which are parallel to the central plate and electrically connected to each other.

According to a second possible embodiment, the sensor has a central elongated plate, surrounded by an annular plate.

In both the above embodiments, the plate edges define a substantially flat, or slightly convex surface, which is adapted to be positioned in the proximity of or in direct contact with the film to be measured.

The capacitance of the capacitor increases as a function of the relative dielectric constant $\varepsilon_r$ and of the thickness of the film in the space region which is crossed by the dielectric flux $\psi$.

The capacitance value is detected by conventional electronic circuitry (e.g. an oscillatory circuit) and converted into a signal indicative of film thickness, by using a special calibration curve.

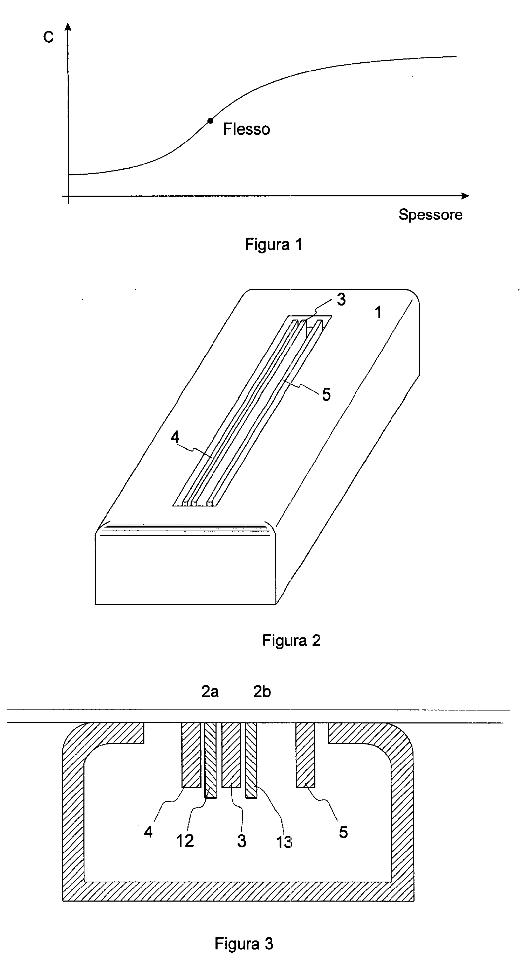

The calibration curve, which defines the one-to-one correspondence between the measured electric capacitance and the thickness of the film in contact with or in the proximity of the sensor, has a shape that is substantially similar to a sigmoid shape (see Fig. 1).

The optimal operating point corresponds to the inflection point of the calibration curve, whereat the sensor has the highest sensitivity, the latter being intended as a ratio of the change in capacitance to a change in the thickness of the measured material.

As a first approximation, when the operating point of the sensor coincides with the inflection point, the resulting film thickness value is half the distance between the two plates of the sensor.

For example, if the two plates of the sensor are at a distance of 200 $\mu$m from each other, the inflection point will approximately correspond to a film thickness of about 100 $\mu$m.

Nevertheless, the film thickness value corresponding to the condition in which the sensor operates at the inflection point is affected by other factors, particularly by the dielectric constant of the material being measured.

Hence, the distance between the plates is selected as a function of the thickness of the material to be measured.

As a rule, the measuring range of capacitive sensors extends from 10-20 $\mu$m to 150-200 $\mu$m, hence the distance between the plates of a capacitive sensor is of about 160-200 $\mu$m.

Typically, with materials as thick as 10 to 200 $\mu$m and having a relative dielectric constant $\varepsilon_r$ of 3 to 7, the changes in capacitance detected throughout the whole measuring range may reach a few tens of pF; hence, the thickness measuring resolution may reach values of the order of 0.1 $\mu$m.

Capacitive sensors for measuring the thickness of dielectric films are known, for instance from US-A-5,030,918 and from EP-B1-0,591,239.

Prior art thickness gauges which use capacitive sensors have a few drawbacks.

Particularly, the sensitivity of prior art capacitive sensors decreases as the distance from the inflection point of the calibration curve increases.

As a consequence, measurement reliability decreases for high and low thicknesses, whereat the sensor operates far from the inflection point of the calibration curve.

It shall be further noted that capacitive sensors are typically used in extrusion blowing plants, wherein the material of films has a temperature of about 90 to 100°C.

Therefore, the plates of the capacitive sensor are subject to thermal expansion, hence to changes in both their mutual distance and in the facing surfaces; this obviously causes a change in the detected capacitance, and a consequent measurement error.

Further, the electronic circuitry of the apparatus associated to the capacitive sensor is itself disturbed by the heat coming from the extruded film.

An additional cause of error, in thickness measurement, is the change in the chemical composition of the extruded mixture, hence in the relative dielectric constant $\varepsilon_r$ of the actually measured material, as compared with the samples whereupon the calibration curve was defined.

The various disturbances affecting the capacitive sensors cause two types of error: an offset error, which is constant through the whole thickness measuring range, and is caused, for instance, by measuring circuit drifts, or by dirt on sensor electrodes, and a gain error, which is proportional to the measured thickness, and is caused by the changes in the dielectric constant of the film material and by the changes in the gain of the electronics.

In order to determine the offset error, it is known to move the capacitive sensor away from the material, to periodically measure the no-load capacitance.

The gain error should be determined by cyclically measuring a test sample.

Nevertheless, this would require a complex mechanical device to move the capacitive sensor toward the test sample.

Also, since the capacitive sensor is located in the proximity of the extruder head, this would require complex arrangements to keep the test sample constantly clean.

In prior art, the gain error of gauges is discriminated by using other information, e.g. by comparing the film measure as detected by the sensor with the average thickness of the extruded film, which is derived from the amount of plastic material input in the plant as defined by the following formula:

$$Sm[m] = \frac{Q \ [g/sec]}{D[g/m3].\phi[m].V[m/sec]}$$

where Sm is the average thickness of the film, D is the (constant) density of the extruded material, $\phi$ is the (constant) diameter of the tube, V is the extrusion velocity (as measured by encoders placed on the driving rollers of the system) and Q is the pellet feed rate (as measured by pellet proportioning systems).

Nevertheless, the above process requires the knowledge of the exact density of the input material, which often is a mixture of different raw materials, and the measurement of other system quantities.

Therefore, the object of this invention is to obviate the problems of prior art thickness gauges which use capacitive sensors and particularly, to improve sensitivity through the whole measurement range, and to improve the discrimination of the gain error.

The above object is achieved by providing a capacitive sensor gauge according to claim 1, and by using a thickness measuring method according to claim 6.

Particular embodiments of the capacitive sensor may be implemented according to the dependent claims.

A possible embodiment of the capacitive sensor gauge, in compliance with the principle of patent claims, and a possible embodiment of the method are described below, without limitation, with reference to the accompanying Figures, in which:

- Figure 1 shows the calibration curve that relates electric capacitance to film thickness in a prior art capacitive sensor;
- Figure 2 is a perspective view of the claimed sensor;
- Figure 3 is a sectional view of the sensor as shown in Figure 2;
- Figure 4 shows the calibration curves of the two capacitances of the capacitive sensor of the apparatus as defined in the claims;

- Figure 5 shows the calibration curve that relates the ratio between the measured capacitances of the claimed sensor to the thickness of the measured film; and
- Figure 6 is a schematic drawing of the capacitive sensor, including a block diagram of the sensor electronics.

Referring to the drawings, numeral 1 generally denotes a capacitive sensor for measuring the thickness of dielectric films.

Preferably, the capacitive sensor 1 has three electrodes, i.e. three elongated and parallel plates 3, 4, 5 which define two capacitors C1, C2 having a common central plate 3.

The central plate is disposed asymmetrically between the two side plates 4, 5; hence the two capacitors C1, C2 have different no-load capacitance values.

The three plates 3, 4, 5 are shaped in such a manner as to concentrate the dielectric flux lines ψ1 and ψ2 of the capacitors C1 and C2, astride the edges of the plates, in two adjacent regions of space 2a, 2b - which are substantially coplanar and outside the space between the plates 3, 4, 5 - which are adapted to receive the film 6 of material.

Alternatively, the two capacitors C1, C2 may be formed by four plates which are arranged in such a manner that the dielectric flux lines ψ1 and ψ2 cover adjacent regions in space.

In order to minimize the dielectric flux in the space between the internal plate 3 and the external plates 4, 5, or to reduce stray capacitances between the central plate 3 and the side plates 4, 5, to improve the sensitivity of the sensor 1, appropriate guard electrodes 12, 13 may be disposed in the spaces between the central plate 3 and the side plates 4, 5, which guard electrodes are connected to a voltage follower circuit which keeps the voltage of guard electrodes 12, 13 equal to that of the central plate 3.

The two capacitors C1, C2 are connected to means 7, 8 which are adapted to simultaneously measure the capacitance of both capacitors.

According to the preferred embodiment, which uses an electronic switching device 7, the capacitors C1, C2 are connected alternately to a single electronic circuit 8 for measuring capacitance and for converting the measured capacitance into an electric signal indicative of the thickness of the film 6.

The use of a single electronic circuit 8 to measure the capacitance of both capacitors C1, C2 is a particularly interesting arrangement, that allows to avoid any errors caused by differences in gain between two identical circuits.

A sufficiently high switching frequency allows a substantially simultaneous measurement of the capacitances C1, C2, even by using a single capacitance measuring circuit 8.

According to the preferred embodiment, the means 8 for measuring capacitance include an AC generator connected to the central plate 3.

By measuring the current flowing through the two capacitors C2, C2, the capacitance thereof is determined.

According to a possible embodiment, the AC applied to the central plate is of the triangular wave type, with a frequency of about 5 KHz.

The selection of the switching frequency of the switching device 7 will depend on the frequency of the voltage applied to the central plate 3.

Preferably, the switching device operates at a frequency that is at least one order-of-magnitude lower than the frequency of the voltage applied to the central plate 3.

Preferably, the distance d1 between the plates 3 and 4, is related to the distance d2 between the plates 3 and 5 by a factor of 1:3 to about 1:5.

Therefore, the inflection points of the calibration curves of the two capacitive sensors C1, C2 correspond to such thickness values S1, S2 that the ratio S2 to S1 is of about 1:3 to about 1:5.

According to a preferred embodiment, d1 = 60 μm and d2 = 240 μm, hence the inflection point F1 corresponds to a thickness of about S1 = 30 μm whereas the inflection point F2 corresponds to a thickness of about S2 = 120 μm.

The measurement spots of the two capacitors C1, C2 are substantially as wide as the distances d1 and d2 respectively.

A microprocessor or operational amplifier system, senses the two capacitances C1 and C2 and derives thickness information therefrom, as is better explained below.

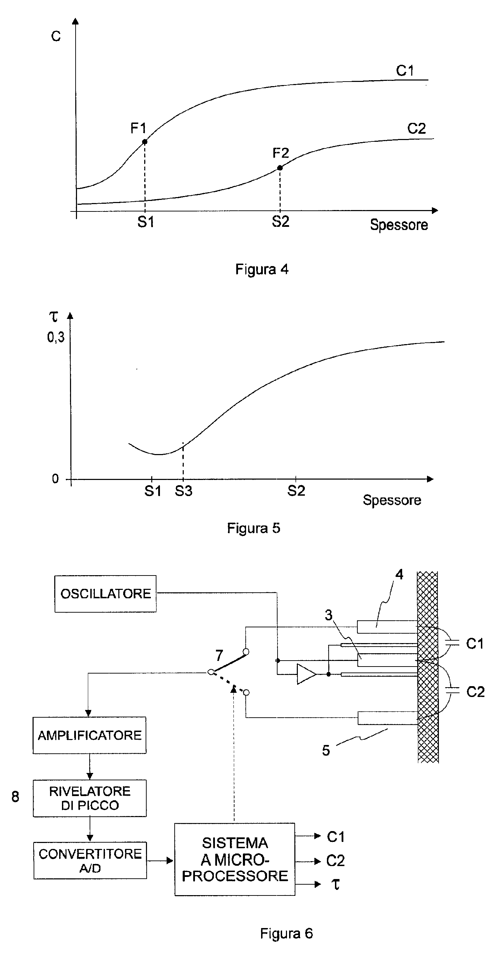

The two capacitors C1 and C2 are identified by two different curves which express the one-to-one correspondence between the respective capacitances and the measured thickness value (see Figure 4).

A third calibration curve may be obtained from these two curves, to define the correspondence between the ratio of measured capacitances $\tau = C2/C1$ and the thickness of the measured material, which curve has a shape as shown in Figure 5.

As is apparent, when the capacitance C1 exceeds a predetermined value, corresponding to a thickness S3 above the thickness S1 of the inflection point of the higher capacitance calibration curve, the pure number $\tau$ and the measured thickness are in one-to-one relation with each other.

With S1 = 30 μm and S2 = 120 μm, the point S3 may correspond to a value of about 50 μm.

Hence, when the capacitance C1 exceeds said predetermined value, which corresponds to a thickness S3, the thickness of the material is derived from the calibration curve which expresses the relation between the ratio $\tau = C2/C1$ and the thickness value.

Those skilled in the art will understand the considerable advantages that derive therefrom.

Since any variation in the dielectric constant $\varepsilon r$ of the measured material changes the capacitances C2 and C1 by the same percentage, the ratio $\tau$ between the two capacitances remains constant, whereby the errors caused by the variations in the dielectric constant of the measured material are avoided.

Similarly, by determining the ratio $\tau$ between the two measured capacitances C2 and C1, all errors caused by changes in the gain of capacitance measuring electronics are mutually exclusive.

Also, by determining the ratio $\tau$ between the two capacitances C2 and C1, the measurement errors caused by the thermal expansion of the plates are avoided.

Hence, for measured thickness values above S3, all errors caused by changes in the dielectric constant $\varepsilon_r$ of the measured material, by changes in the gain of capacitance measuring electronics, and by thermal expansion of plates may be avoided.

However, the ratio $\tau$ between the capacitances C2 and C1 cannot be used when the capacitance C1 is lower than said predetermined value, i.e. for measuring thicknesses below S3, because below said value, the ratio $\tau$ and the thickness of the material 6 are not in one-to-one correspondence with each other (see Figure 5).

Therefore, when C1 is lower than said predetermined value, the measured capacitance C1 is only accounted for, i.e. the one of the capacitor whose calibration curve has S1 as its inflection point, hence the highest sensitivity, at low thicknesses.

Those skilled in the art will appreciate that this arrangement allows to measure low thicknesses with a sensitivity above that of a prior art capacitive sensor.

In the above described embodiment, the plates 3, 4, 5 are substantially straight members; nevertheless, it shall be intended that these plates may have other shapes, particularly like coaxial concentric members.

Preferably, the plates 3, 4, 5 will be made like blades at least as thick as about 0.5 mm, in such a manner as to provide ad adequate resistance to the abrasion caused by the relative movement of the material to be measured 6 and the sensor 1.

In order to allow an easy mechanical anchorage of the plates 3, 4, 5 to the apparatus, the plates are at least 5 mm high.

In the embodiment as described and shown herein, the calibration curve $\tau$ is given by the ratio C2/C1.

Obviously, those skilled in the art may consider the possibility of determining the thickness by using a calibration curve obtained from the inverted ratio $\tau'$ C1/C2.

In a possible embodiment, the sensor 1 is adapted to perform measurements in contact with the film.

Alternatively, means (not shown) may be provided that are adapted to create an air cushion to keep the capacitive sensor apart, at a predetermined distance, from the measured film.

**Claims**

1. An apparatus for measuring the thickness of dielectric materials in film form, which has a capacitive sensor that can confine the dielectric flux lines ($\psi1$, $\psi2$) to a region of space (2a, 2b) outside the space defined by the sensor plates (3, 4, 5), which region in space (2a, 2b) is adapted to receive the film (6) of material to be measured, said sensor (1) having a central plate (3) disposed asymmetrically between the two side plates (4, 5), the three plates (3, 4, 5) forming two capacitors (C1, C2) with a common plate (3), **characterized in that** means (7) are provided to simultaneously measure the capacitances of said two capacitors (C1, C2) and to convert the so measured capacitances into a signal indicative of the thickness of the measured material (6), and that means (8) are also provided to determine the ratio ($\tau$) between the measured capacitances (C1, C2) and to derive the thickness of the dielectric film (6) as a function of said ratio ($\tau$).

2. An apparatus as claimed in claim 1, wherein said means (7, 8) for simultaneously measuring the capacitances of said two capacitors (C1, C2) include an electronic switching device (9) for alternately connecting said two capacitors (C1, C2) to said capacitance measuring means (8) and for converting the measured capacitance into a signal indicative of the thickness of the measured material (6).

3. An apparatus as claimed in claim 1 or 2, wherein guard electrodes (12, 13) are disposed in the spaces between said central plate (3) and said side plates (4, 5), which guard electrodes (12, 13) are connected to means for keeping their voltage equal to that of said central plate (3), to minimize the dielectric flux in the region of space between said central plate (3) and said side plates (4, 5).

4. An apparatus as claimed in any claim from 1 to 3, wherein the ratio of the distance of the farther side plate (5) from the central plate (3) to the distance of the closer side plate (4) from the central plate (3) is of 3 to 5.

5. An apparatus as claimed in any preceding claim, modified in that said central plate (3) is replaced by two distinct plates.

6. A method for measuring the thickness of a dielectric material in film form by using two capacitors (C1, C2) with distinct no-load capacitances, so that the no-load capacitance of the first capacitor (C1) is higher than the no-load capacitance of the second capacitor (C2), and by applying two dielectric fluxes ($\psi1$, $\psi2$) in two adjacent regions in space (2a, 2b), occupied by a film of material, which has the cyclic steps of:

- measuring the capacitance detected by the first capacitor (C1);
- if the capacitance of said first capacitor (C1) is lower than a predetermined value, which corresponds to a thickness (S3) above the measured thickness (S1), as measured at the inflection point (F1) of the calibration curve of said first capacitor (C1), converting the capacitance value of said first capacitor (C1) into the corresponding thickness value;
- if the capacitance of said first capacitor (C1) is higher than a predetermined value, which corresponds to a thickness (S3) above the measured thickness (S1), as measured at the inflection point (F1) of the calibration curve of said first capacitor (C1), measuring the capacitance detected by the second capacitor (C2), determining the ratio $\tau = C2/C1$, or the inverted ratio $\tau'$ C1/C2 and converting said ratio $\tau$ or said inverted ratio $\tau'$ into the thickness value of the measured film.

Figura 1

Figura 2

Figura 3

Figura 4

Figura 5

Figura 6